(19) Europäisches Patentamt
European Patent Office
Office européen des brevets

(11) **EP 2 037 593 A2**

(12) **EUROPÄISCHE PATENTANMELDUNG**

(43) Veröffentlichungstag:
**18.03.2009 Patentblatt 2009/12**

(51) Int Cl.:
***H04B 7/08*** *(2006.01)*

(21) Anmeldenummer: **08011875.5**

(22) Anmeldetag: **01.07.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **10.07.2007 DE 102007032048**

(71) Anmelder: **Delphi Delco Electronics Europe GmbH**
**42119 Wuppertal (DE)**

(72) Erfinder:
• **Lindenmeier, Stefan**
**82131 Gauting (DE)**
• **Lindenmeier, Heinz**
**82152 Planegg (DE)**
• **Reiter, Leopold**
**82205 Gilching (DE)**
• **Hopf, Jochen**
**85540 Haar (DE)**

(54) **Antennendiversityanlage für den relativ breitbandigen Funkempfang in Fahrzeugen**

(57) Antennendiversityanlage für den relativ breitbandigen Funkempfang in Fahrzeugen, die einen Empfänger (3), eine Mehrantennenanlage (1) mit Zuleitungen zu einem Signal-Auswahlschalter (2) zur Auswahl eines diversitätsmäßig anderen Empfangssignals und einen Diversityprozessor (4) umfasst, welcher die Qualität des gerade zum Empfänger (3) gelangenden Empfangssignals (17) bewertet, um bei Auftreten von Störungen durch Umschalten ein diversitätsmäßig anderes Empfangssignal zum Empfänger (3) zu führen.

Das im Empfänger (3) vorhandene Empfangssignal (17) mit der relativ großen Frequenzbandbreite B ist dem Diversityprozessor (4) zugeführt. Zur Feststellung der Signalqualität des Empfangssignals (17) ist dessen Frequenzbandbreite B in Frequenzintervalle (Δf) aufgeteilt, innerhalb deren jeweils die Frequenzanteile des Empfangssignals (17) bei gegebener Mehrwegeausbreitung weitgehend konstant sind.

Im Diversityprozessor (4) ist eine frequenzintervallselektive Pegelerfassung (5) vorhanden, welche die in den Frequenzintervallen auftretenden Anteile des Empfangssignals (17) als frequenzintervallspezifische Pegelwerte (11) getrennt erfasst. Diese Anteile des Empfangssignals (17) werden in einer frequenzintervallselektiven Pegelbewertung (6) mit einer für den störungsfreien Empfang geforderten Signalpegelschwelle (7) getrennt verglichen und durch Auswertung dieser Messungen über alle Frequenzintervalle (Δf) die Störrate (13) des Empfangssignals (17) ermittelt. Bei Auftreten von Fehlern wird ein diversitätsmäßig anderes Empfangssignal (17) bzw. das Empfangssignal (17) mit der kleinsten Störrate (13) zum Empfänger (3) geführt.

Fig. 1

EP 2 037 593 A2

**Beschreibung**

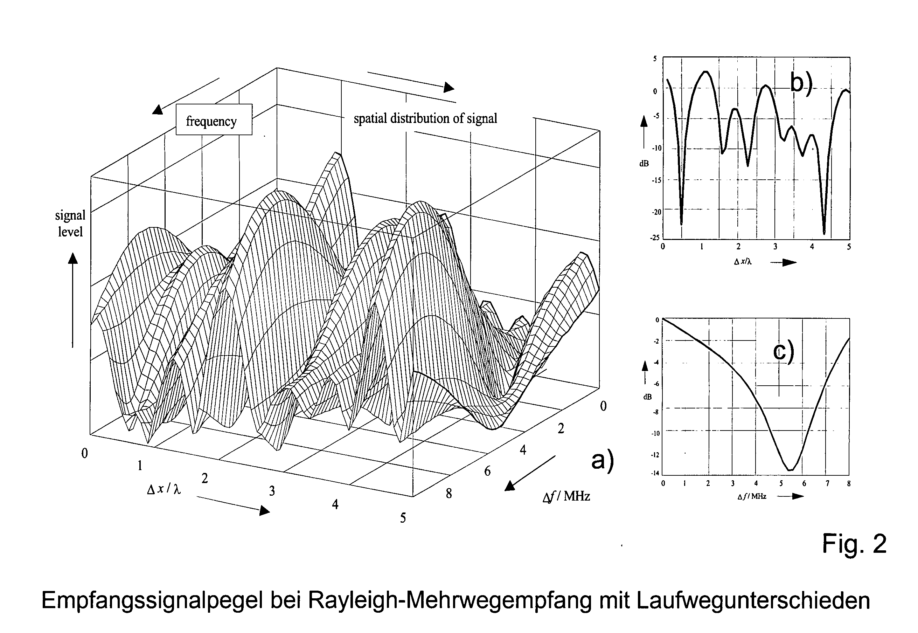

Die Mehrwegeausbreitung führt bei nicht zu vernachlässigenden Wegunterschieden der am Empfangsort eintreffenden elektromagnetischen Wellenbündel zu einer Einengung der Bandbreite des Kanals von der Senderantenne zum mobilen Empfänger. Es ergibt sich deshalb an einem Empfangsort in der Frequenz eine ähnliche Abhängigkeit, wie sie bei einer festen Frequenz über dem Fahrweg zu beobachten ist. Diese Abhängigkeit ist in Fig. 2a in einem Wellenfeld mit Rayleigh-Ausbreitung in zweidimensionaler Darstellung veranschaulicht. Insbesondere beim relativ breitbandigen Funkempfang, dessen Kanalbandbreite größer ist als die aufgrund des Mehrwege-Empfangs bedingten Bandbreite des Übertragungskanals, führt dieses Phänomen zu Störungen, die vom Fernsehempfang in Fahrzeugen bekannt sind. In Figur 2c ist die Pegelverteilung an einem Ort über der Frequenz dargestellt und zeigt zum Beispiel, dass bei einer Frequenzabweichung von etwa 5,5 MHz vom Bildträger ein Empfangsminimum besteht. Bei einer Diversityanlage nach dem Scanningverfahren kann somit eine Antenne, welche für guten Empfang des Bildträgers ausgewählt ist, den Tonträger nicht gleichermaßen gut empfangen. In der europäischen Patentschrift EP 0521 123B1 werden deshalb die Signale einer Mehrantennenanlage durch getrennte Anwendung jeweils einer Diversityanlage für Bild- und Tonempfang getrennt. Gleichermaßen bleibt der Nachteil bestehen, dass die vom Bildträger weit abliegenden Bildsignalanteile nur mangelhaft wiedergegeben werden. Insbesondere bei digital modulierten relativ breitbandigen Übertragungsverfahren - wie zum Beispiel dem DVBT-Verfahren (Digital Video Broadcasting Terrestrial) und dem DAB-Verfahren (Digital Audio Broadcastig) - wirkt sich der Verlust aufgrund nicht detektierbarer Symbole zu erhöhten Bitfehlerraten häufig derart aus, dass die Funkverbindung abbricht.

Aufgabe der Erfindung ist es deshalb, eine besonders wirtschaftliche Antennen-Diversityanlage anzugeben, welche die mit der zu geringen Bandbreite des Übertragungskanals verbundenen Nachteile weitgehend vermeidet.

Diese Aufgabe wird bei einer gattungsgemäßen Anlage durch die kennzeichnenden Merkmale des Anspruchs 1 gelöst.

Der besondere Vorteil einer Antennen-Diversityanlage nach der Erfindung besteht darin, mit nur einem Empfangstuner auszukommen und aus einer Vielzahl von Antennensignale A1, A2,..AN mit hoher Wahrscheinlichkeit ein Signal auswählen zu können, dessen Signalanteile über die gesamte Kanalbandbreite B oberhalb der für einen störungsfreien Empfang notwendigen Pegel liegen. Dieser Vorteil ist insbesondere entscheidend für die Übertragung nach den modernen OFDM-Verfahren (orthogonal frequncy-devision multiplexing), wie zum Beispiel bei Fernsehübertragungen nach dem DVBT-Verfahren und bei Hörfunkübertragungen nach dem DAB-Verfahren. In beiden Fällen werden die Signale durch eine Vielzahl in der Frequenz äquidistant angeordneter, jeweils MPSK-modulierter (d.i. BPSK, QPSK, 8PSK, etc.) Unterträger übertragen. Dabei kommen hauptsächlich modulierte Unterträger nach dem QPSK-(Quadraturphasenumtastung) bzw. auch nach dem QAM- (Quadraturamplitudenmodulation) Verfahren zur Anwendung. Dabei ergibt sich z.B. die Kanalbandbreite B eines DVBT-Signals mit ca. 6700 Unterträger mit einem Frequenzabstand von ca. 1.1 kHz zu ca. 7,5MHz. Die Kanalbandbreite B ergibt sich für ein DAB Signal mit circa 1500 Unterträgern von etwa 1kHz Abstand zu circa 1,5MHz. Es zeigt sich, dass die sichergestellte Bandbreite des Übertragungskanals von der Sendeantenne zum mobilen Empfänger bei Rayleigh-Verteilung nicht kleiner ist als 0,6 MHz, wenn die Laufwegunterschiede nicht größer sind als 100 m. Diese Bandbreite ist jedoch sehr klein gegenüber den Erfordernissen beim mobilen digitalen TV Empfang und auch beim digitalen Hörrundfunkempfang.

Ausführungsbeispiele der Erfindung sowie die Darstellung ihrer Funktion werden an Hand der folgenden Figuren näher erläutert:

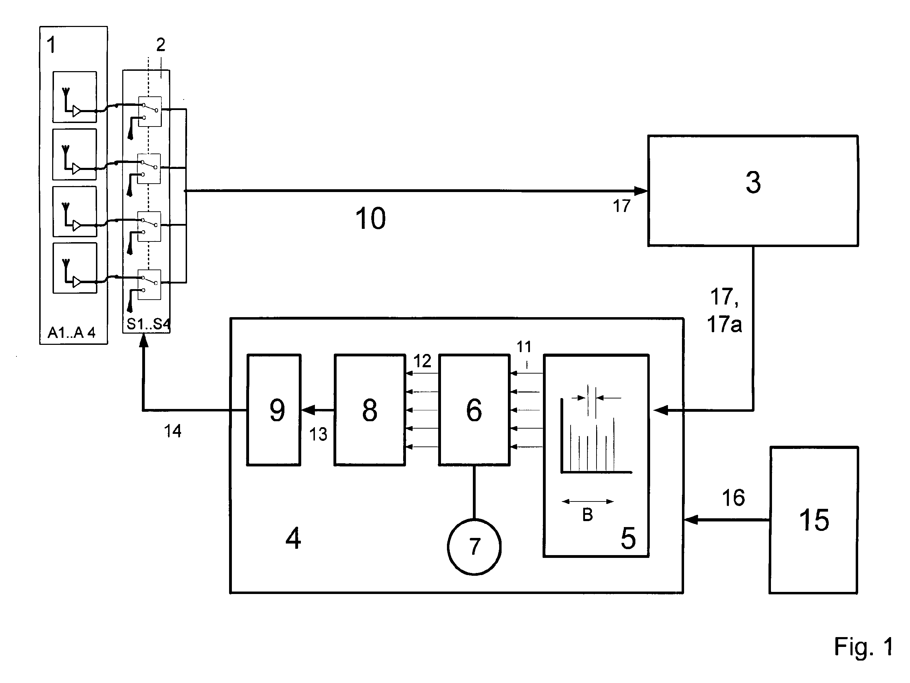

Fig.1: Erfindungsgemäße Antennendiversityanlage bestehend aus Mehrantennenanlage 1, Signal-Auswahlschalter 2, Empfänger 3 und Diversityprozessor 4 mit Taktgeber 15. Im Diversityprozessor 4 ist die frequenzintervallselektive Pegelerfassung 5 des Empfangssignals 17 enthalten, deren Ausgangssignale in der frequenzintervallselektiven Pegelbewertung 6 mit der Signalpegelschwelle 7 verglichen werden. Aus den Abweichungen wird die Störrate in der Störrateermittlung 8 des Empfangssignals 17 festgestellt und diese der Störratespeicherung mit Adresssignalerzeugung 9 zugeführt, worin ein Adresssignal zur Einstellung des Signal-Auswahlschalters 2 erzeugt ist.

Fig. 2: Darstellung der Empfangssignalpegel bei Rayleigh-Mehrwegeempfang mit Laufwegunterschieden über Ort und Frequenz

Fig.3: Pegelverteilung über dem Empfangsfrequenzkanal der Antennensignale A1..A4 über der Frequenz der Pilotträger eines DVBT-Systems an einem ersten Empfangsort. Die Pilotträger der Antennensignale A3 und A4 werden alle oberhalb der Detektierbarkeitsschwelle empfangen.

Fig.4: Pegelverteilung wie in Figur 3 jedoch an einem anderen Empfangsort. Dort werden die Pilotträger der Antennensignale A1 und A2 alle oberhalb der Detektierbarkeitsschwelle empfangen.

Fig.5: Störwahrscheinlichkeit bei Ausbreitungsprofil 100m/300m in Abhängigkeit von der Signalpegelschwelle für fehlerfreie Detektion ohne und mit Antennendiversity mit 4 teilweise korrelierten Antennen.

Fig.6: wie in Figur 5 jedoch bei Ausbreitungsprofil 200m/600m

Fig.7: wie in Figur 5 jedoch bei Ausbreitungsprofil 400m/1200m

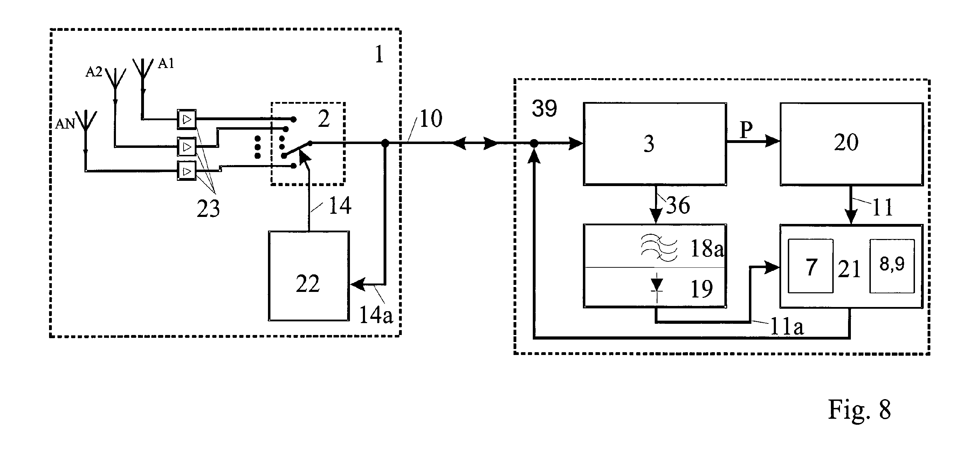

Fig.8: Antennendiversityanlage nach der Erfindung mit Auswertung der Pilotamplituden P in der Pilotamplitudenerfassung 20 und Erfassung der Empfangsleistung im Empfangskanals B durch Auswertung des ZF-Signals 36 zur Bildung der Rankingliste und zur aktuellen Auswahl eines der Empfangssignale der Antennen A1...AN (mit gegebenenfalls verbundenen HF-Verstärker 23) durch den Mikrocontroller 21, in welchem das codierte Adresssignal 14a für die Ansteuerung des Adresssignalgenerators 22 generiert ist zur Weiterleitung über die Hochfrequenzleitung 10 und zur Einstellung des Signal-Auswahlschalters 2 mit Hilfe des Adresssignals 14.

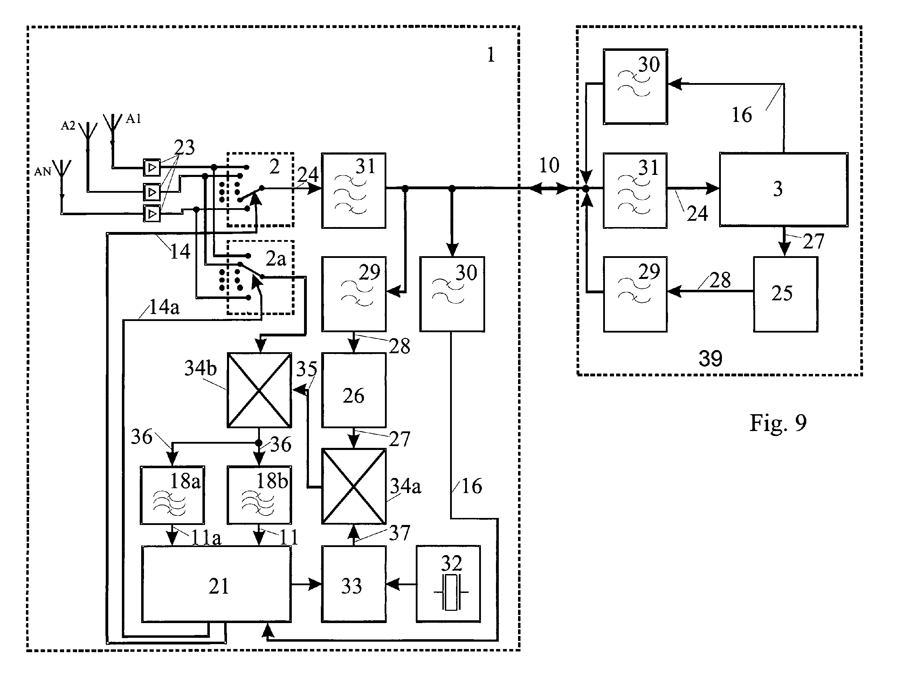

Fig.9: Antennendiversityanlage nach der Erfindung mit geringfügig erweitertem Empfänger 39 und einer abgesetzten Mehrantennenanlage 1 mit einem Signal-Vorauswahlschalter 2a zur zeitlich parallel zum Empfang stattfindenden getakteten Ermittlung eines empfangswürdigen HF-Signal 24s gesteuert durch den Mikrocontroller 21, in welchem auf der Basis des vom Empfänger 39 gelieferten Oszillatorsignals die Störrate 13 ermittelt ist und das Adresssignal 14 generiert ist, mit welchem anhand des ebenso im Mikrokontroller 21 verfügbaren Taktsignals 16 zeitrichtig die Auswahl des Empfangssignals 24 erfolgt. Zusätzlich ist über den ZF-Breitbandbandpass 18a die Signalleistung im Empfangskanal B als HF-Kanalspezifischer Pegelwert 11a zum Zwecke der Vorinformation bezüglich der Signalqualität des betreffenden HF-Signals 24 erfasst.

Fig.10: Antennendiversityanlage wie in Figur 9 jedoch mit einem digital codierten Oszillatorfrequenz-Signal 38 zur Einstellung des Voltage-controlled oscillators (VCO) 33 über den Mikrocontroller 21 zur Erzeugung des Frequenzintervall-Selektionssignals 35.

Die folgenden Betrachtungen sollen zeigen, dass es erfindungsgemäß jeweils mit hoher Wahrscheinlichkeit möglich ist, aus einer Vielzahl verfügbarer Antennensignale A1, A2,..AN ein HF-Signal 24 diversitätsmäßig derart auszuwählen, so dass keiner der empfangenen Unterträger die Detektierbarkeitsschwelle unterschreitet.

Dies wird erfindungsgemäß dadurch erreicht, dass dem Diversityprozessor 4 das im Empfänger vorhandene Empfangssignal 17 mit der relativ großen Frequenzbandbreite B vorzugsweise in der ZF-Frequenzebene zugeführt wird zur Feststellung der Signalqualität des Empfangssignals 17, dessen Frequenzbandbreite B in Frequenzintervalle Δf aufgeteilt ist. Die Frequenzbandbreite der Frequenzintervalle Δf ist dabei kleiner zu wählen als die zu erwartende Bandbreite des Übertragungskanals. Damit sind die Pegel der Frequenzanteile des Empfangssignals 17 innerhalb der Frequenzintervalle Δf jeweils bei gegebenen Reflexionsbedingungen weitgehend konstant. Im Diversityprozessor 4 ist eine frequenzintervallselektive Pegelerfassung 5 vorhanden, welche die in den Frequenzintervallen auftretenden Anteile des Empfangssignals 17 als frequenzintervallspezifische Pegelwerte 11 getrennt erfasst. Diese Anteile des Empfangssignals 17 werden in einer frequenzintervallselektiven Pegelbewertung 6 mit einer für den störungsfreien Empfang geforderten Signalpegelschwelle 7 getrennt verglichen und durch Auswertung dieser Messungen über alle Frequenzintervalle Δf die Störrate 13 des breitbandigen Empfangssignals 17 ermittelt. Bei Auftreten von Fehlern wird durch ein Signal an den Signal-Auswahlschalter 2 ein diversitätsmäßig anderes Empfangssignal 17 zum Empfänger 3 geführt. Im Diversityprozessor 4 besteht dann die Möglichkeit durch sukzessives Anschalten aller verfügbaren Antennensignale dasjenige HF-Signal 24 mit der geringsten Störrate 13 auszuwählen.

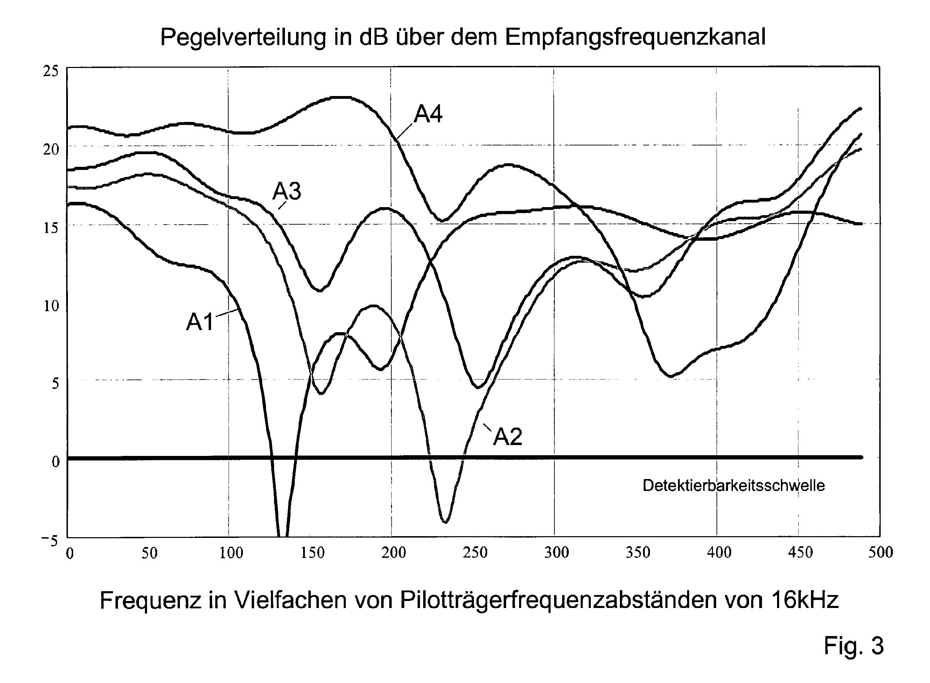

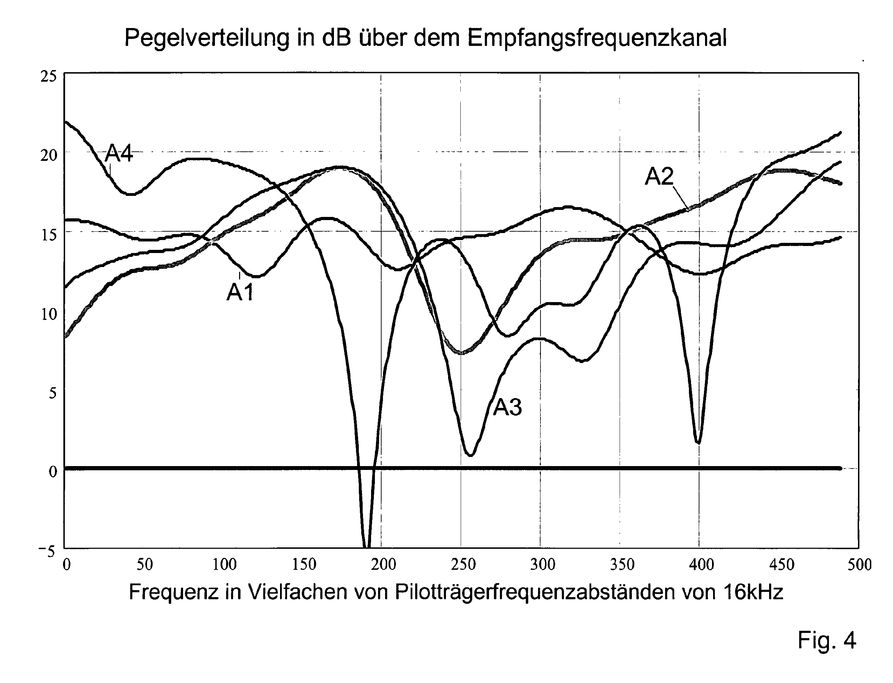

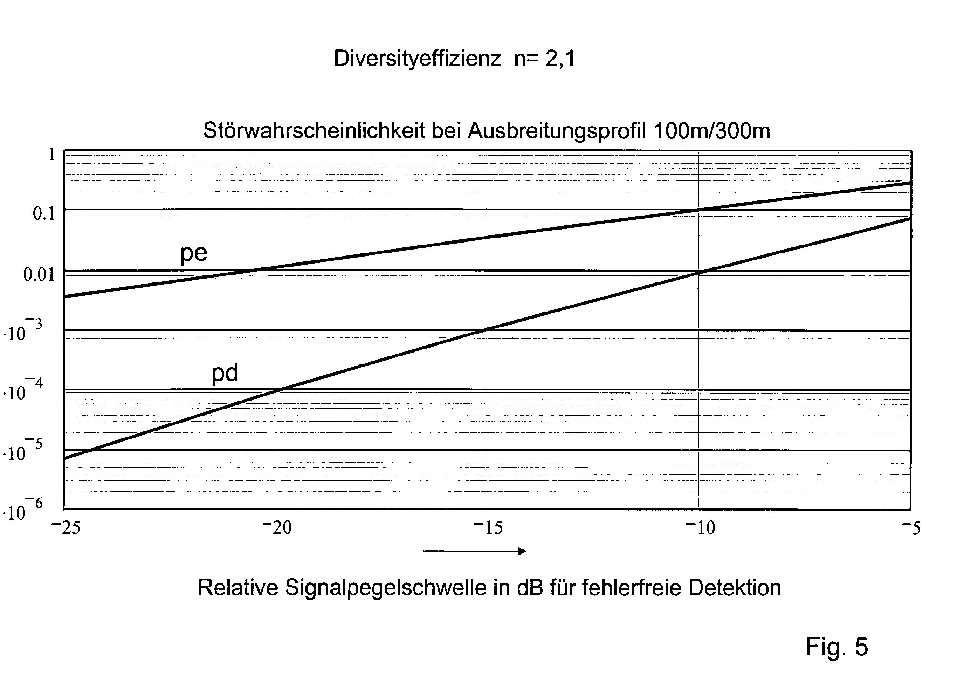

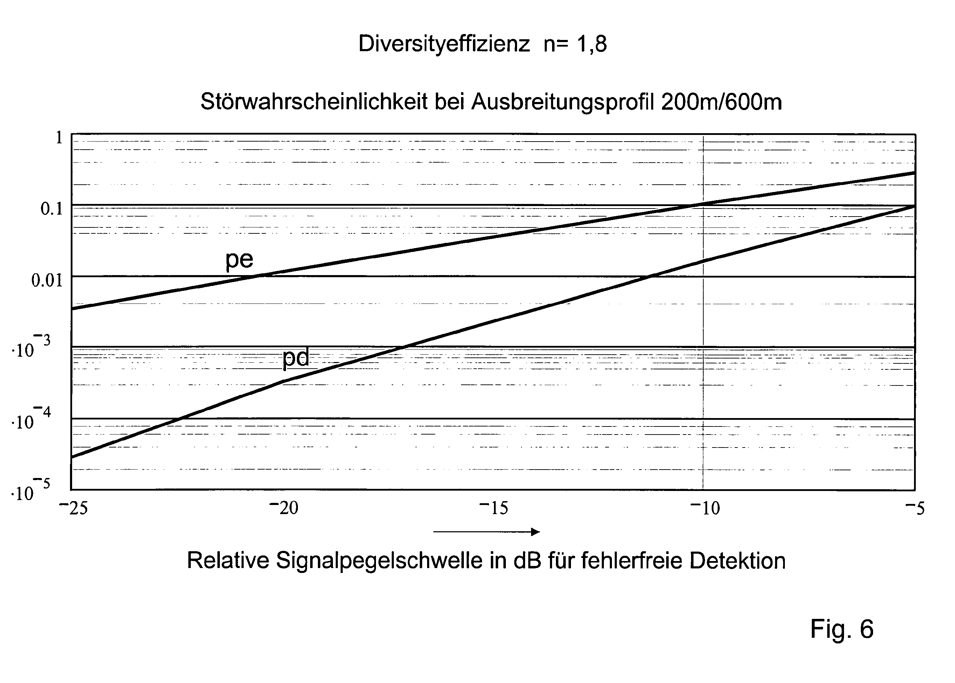

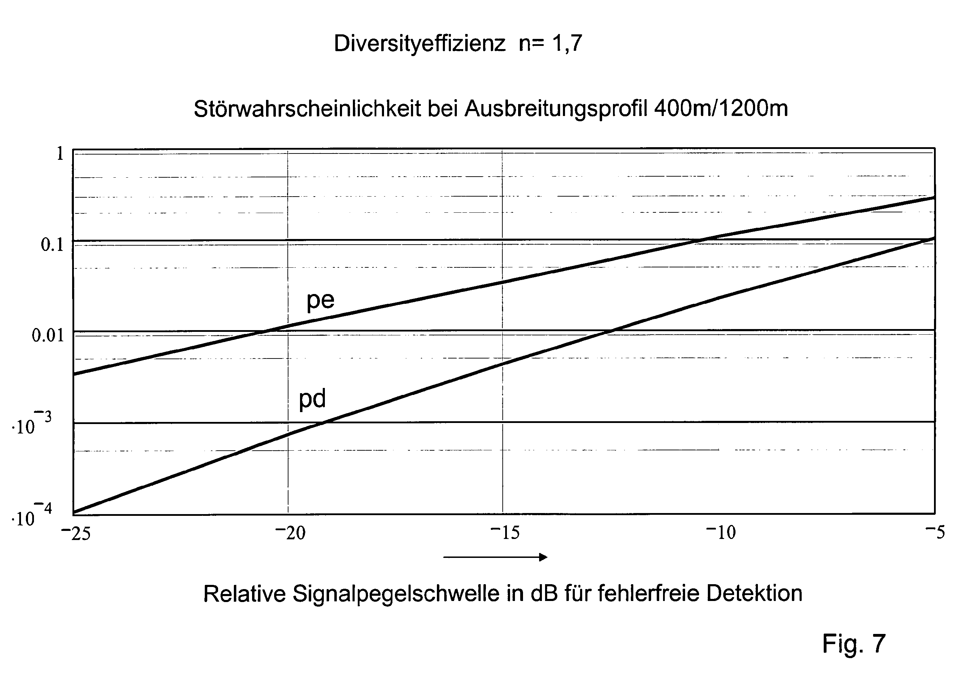

Bei TV-Signalen nach dem DVBT-Verfahren werden zur phasenrichtigen Detektion der Unterträger des Systems z.B. 489 Pilotträger P im Frequenzabstand von 16 kHz über die gesamte Kanalbandbreite ausgesendet. Dieser Frequenzabstand von Δf = 16kHz eignet sich besonders zur Festlegung der Frequenzintervalle nach der vorliegenden Erfindung, wobei der Pegel jedes empfangenen Pilotträgers P als frequenzintervallspezifischer Pegelwert 11 nach der Erfindung behandelt wird. In Figur 3 ist die Pegelverteilung der Pilotträger über dem Empfangsfrequenzkanal für die Antennen A1..A4 aufgetragen. Hierbei wurde ein Ausbreitungsprofil für die empfangenen Wellenbündel derart angesetzt, dass die Intensität der Wellenbündel mit größer werdenden Laufwegunterschieden abnehmen. Das dargestellte Diagramm zeigt für eine momentane Empfangssituation an einem Ort deutlich, dass die Antennensignale A1 und A2 im Bereich 125..140 beziehungsweise im Bereich zwischen 225..245 die entsprechenden Pilotträger verlieren, dass jedoch die Antennensignale A3 und A4 alle Pilotträger störungsfrei empfangen. Damit werden auch die in der Frequenz zwischen den Pilotträgern angesiedelten Unterträger störungsfrei empfangen. An einem anderen Ort zeigt die Momentaufnahme in Figur 4 eine starke Frequenzabhängigkeit des Antennensignals A4 mit einem Verlust der Pilotträger im Bereich zwischen 180 und 200 und ebenso starke Frequenzabhängigkeiten des Antennensignals A3, während sowohl das vorher gestörte Antennensignal A2 als auch das Antennensignal A1 alle Pilotträger störungsfrei empfängt. Zur Quantifizierung der mit der Antennen-Diversityanlage bewirkten Verkleinerung der Störwahrscheinlichkeit sind die Bitfehlerraten in den Figuren 5 bis 7 über der erforderlichen Signalpegelschwelle in dB für fehlerfreie Detektion der Unterträger dargestellt. Die obere Kurve zeigt jeweils die Bitfehlerrate $p_e$ bei Betrieb ohne Antennen-Diversity, die untere Kurve ($p_d$) jeweils mit Antennen-Diversity. In den Figuren sind unterschiedliche Ausbreitungsprofile angenommen, wobei die erste Längenangabe den Laufwegunterschied beschreibt, nach dem die Wellenbündel auf das 1/e-fache in der Intensität abgenommen haben und die zweite Längenangabe besagt, dass Wellenbündel mit größerem Laufwegunterschied als dieser Wert nicht relevant sind. Die Diversityeffizienz ist nur wenig vom Ausbreitungsprofil abhängig und zeigt insbesondere für den in städtischen Gebieten häufig auftretenden Fall von 100m/ 300m und Berücksichtigung der teilweisen Korrelation der Antennensignale A1..A4 einen guten Wert von n = 2,1. Der Zusammenhang zwischen der Störwahrscheinlichkeit $p_e$ ohne Antennendiversity, der Störwahrscheinlichkeit $p_d$ mit Antennendiversity lautet:

$$p_d = (p_e)^n$$

Auf hierzu analoge Weise werden beim Empfang von DAB-Hörfunksignalen die Frequenzintervalle $\Delta f$ durch die Vielzahl der Unterträger gebildet und die frequenzintervallspezifischen Pegelwerte 11 der so definierten Frequenzintervalle $\Delta f$ = ca. 1kHz durch die Pegelwerte der Unterträger erfasst.

Ein besonderer Vorteil einer Antennen-Diversityanlage nach der Erfindung ist dadurch gegeben, dass sich die Diversityeffizienz durch Bildung von Linearkombinationen aus den Empfangssignalen der Antennen auf äußerst kostengünstige Weise weiter steigern lässt. Hierbei können Mittel zur Phasendrehung und Amplitudengestaltung vorteilhaft angewandt werden.

Die Ausgangssignale der frequenzintervallselektiven Pegelbewertung 6 können in einer weiteren vorteilhaften Ausgestaltung als binäre Signale gestaltet und der Störrateermittlung des Empfangssignals 8 zugeführt werden. Dort kann in einer einfachsten Ausführungsform zum Beispiel die Anzahl der gestörten Unterträger bei digitaler Modulation ermittelt werden. Daraus kann somit die Störrate 13 des Empfangssignals 17 durch Auswertung der binären Signale unmittelbar angegeben werden.

Die Ermittlung der Störrate 13 in Verbindung mit der Aktualisierung eines günstigen durchgeschalteten Empfangssignals 17 kann erfindungsgemäß wiederholend in kurzen zeitlich aufeinander folgenden Schritten erfolgen, wobei die Zeitintervalle kurz genug zu wählen sind, damit der innerhalb eines solchen Intervalls zurückgelegte Fahrweg die Länge $\lambda/10$ möglichst nicht überschreitet. Die kurzen zeitlich aufeinander folgenden Schritte werden auf einfache Weise durch einen Taktgeber 15 wiederholend initiiert, durch dessen Taktsignal 16 die Ermittlung der Störrate 13 wiederholend erfolgt. Um zu vermeiden, dass das Taktsignal 16 während der Symboldauer auftritt ist es erfindungsgemäß vorteilhaft, das Taktsignal 16 aus dem Symboltakt des OFDM-Signals abzuleiten. Die DVBT-Symboldauer unter Einbeziehung des Guard-Intervalles beträgt z.B im 8k-Mode je nach Auslegung des Systems etwa 1ms. Besonders vorteilhaft ist es erfindungsgemäß, die Umschaltung des Antennensignals während des Guard-Intervalles einzurichten.

Mit dem Ziel eine Rankingliste hinsichtlich der Empfangsqualität der Empfangssignale 17 zu erstellen, ist in einer vorteilhaften Ausführungsform der Erfindung im Diversityprozessor 4 eine Störratespeicherung mit Adresssignalerzeugung 9 vorhanden. Darin wird die Störrate 13 jeweils abgespeichert und die jeweils aktuelle Störrate 13 mit den zeitlich vorausgehenden abgespeicherten Störraten 13 verglichen. Das in der Rankingliste kennzeichnete günstigste Antennensignal 17 wird mit Hilfe eines entsprechend erzeugten Adresssignals 14 an den Signal-Auswahlschalter 2 geleitet, so dass aus den verfügbaren Empfangssignalen 17 beziehungsweise den entsprechenden Empfangssignalen 17a in der ZF-Ebene dasjenige mit der kleinsten Störrate 13 durchgeschaltet ist.

Die vorliegende Erfindung kann in besonders vorteilhafter Weise für den Empfang von DVBT-modulierten Signalen eingesetzt werden. Zur sicheren Übertragung eines solchen Signals ist zum Beispiel jeder zehnte Unterträger als Pilotträger gestaltet, dessen Phase die Referenzphase für die Phasendetektion der in der Frequenz benachbarten Unterträger liefert. Der Frequenzabstand zwischen zwei Pilotträgern beträgt somit circa 10 kHz und ist klein genug, um den Übertragungskanal über diese kleine Frequenzbandbreite als konstant betrachten zu können. Die in der Frequenz zwischen den Pilotträgern angesiedelten Unterträger, deren Phase bei QPSK-Modulation - beziehungsweise auch in Verbindung mit deren Amplitude bei QAM-Modulation - die zu übertragende Informationen enthalten, können dabei auch im durch Mehrwegeausbreitung gestörten Empfangsfeld richtig detektiert werden, sofern die Pilotträger mit genügend großem Pegel empfangen werden. In jedem DVBT-Empfänger ist ein Prozessor zur Auswertung dieser Signale vorhanden, welcher in vorteilhafter Weise durch wenig aufwändige Ergänzungen zu einem Diversityprozessor 4 nach der vorliegenden Erfindung gestaltet werden kann. Dabei werden die Frequenzintervalle $\Delta f$ durch die Vielzahl der im Frequenzabstand $\Delta f$ angeordneten Pilotträger gebildet und die frequenzintervallspezifischen Pegelwerte 11 der Frequenzintervalle $\Delta f$ durch die Pegelwerte der Pilotträger P erfasst. Zur Auswertung der Phase der Pilotträger P liegen die I- und Q-Komponenten vor, aus denen zum Beispiel die Amplitudenwerte der Pilotträger erfasst werden und zur Beurteilung der Störrate 13 erfindungsgemäß herangezogen werden. Der beim Empfang ermittelte Amplitudenwert eines Pilotträgers kann erfindungsgemäß auf einfache Weise in Beziehung zu dem Mindestwert gesetzt werden, welcher zur fehlerfreien Detektion des Signaleinhalts der im Frequenzintervall $\Delta f$ von zum Beispiel 10 kHz Frequenzbandbreite jeweils zwischen zwei Pilotträgern positionierten Unterträgern notwendig ist. Die für die Pilotträger ermittelte Störrate 13 entspricht somit die Störrate des gesamten digitalen Empfangssignals im Empfangskanals B.

Die digitale Auswertung der Amplituden der Pilotträger ist naturgemäß mit einer Wartezeit (latency) verbunden, welche in der Regel mit der Anzahl der zu erfassenden Pilotträger ansteigt. Im Interesse eines möglichst geringen Schaltungsaufwands in Verbindung mit einer möglichst geringen Wartezeit ist es deshalb erfindungsgemäß vorteilhaft, die Bandbreite der Frequenzintervalle Δf größer zu wählen - zum Beispiel 50 kHz - und z. B. die Amplitude lediglich jedes fünften Pilotträgers als frequenzintervallspezifischen Pegelwert 11 zur Ermittlung der Störrate 13 des Empfangssignals 17 heranzuziehen.

In Figur 8 ist der in Figur 1 dargestellte Diversityprozessor 4 in einer vorteilhaften Weiterbildung der Erfindung in seinen Funktionen aufgeteilt auf einen erweiterten Empfänger 39 und auf die Mehrantennenanlage 1, welche über die Hochfrequenzleitung 10 miteinander verbunden sind. Der Empfänger 3 für die oben beschriebenen OFDM-Funkanlagen ist in seiner Grundstruktur ohne Diversity-Funktion in der Regel als Überlagerungsempfänger mit Oszillatorsignal 27 und ZF-Signal 36 gestaltet und enthält Schaltungseinheiten zur Weitergabe der Pilotträger P an die Pilotamplitudenerfassung 20 in Figur 8. Die Ermittlung der Störrate 13 des Empfangssignals 17 erfolgt im Mikrocontroller 21 mit der darin enthaltenen Störrateermittlung 8 durch Vergleich der Pilotamplituden mit der Signalpegelschwelle 7. In Erweiterung der im Zusammenhang mit Figur 1 beschriebenen Diversityfunktion wird in der Anordnung in Figur 8 die Signalleistung innerhalb des Empfangskanals B als grobe, jedoch sehr schnell verfügbare Frühformation über die Qualität des aktuell aufgeschalteten Antennensignals A1..AN ermittelt. Anhand der so gewonnenen Frühinformation kann in vorteilhafter Weise die Rankingliste wirkungsvoll ergänzt werden, wobei ein Antennensignal A1..AN z. B. von der Anwahl bereits ausgeschieden werden kann, bevor die Ermittlung der - mit der beschriebenen Wartezeit verbundenen, jedoch aussagekräftigeren - Störrate 13 anhand der Pilotamplitudenerfassung 20 erfolgt ist. Die Gewinnung dieser Frühinformation kann beispielhaft in vorteilhaft einfacher Weise durch Auswertung des ZF-Signals 36 des Empfängers 3 mit Hilfe des ZF-Breitbandbandpass 18a mit nach geschaltetem Pegeldetektor 19 erfolgen, dessen am Ausgang verfügbarer HF-kanalspezifischer Pegelwert 11a im Mikrocontroller 21 entsprechend für die Bildung des codierten Adresssignals 14a herangezogen wird. Das Adresssignal 14a wird über die Hochfrequenzleitung 10 der Mehrantennenanlage 1 zugeführt, worin ein Adresssignalgenerator 22 das Adresssignal 14 zur Ansteuerung des Signal-Auswahlschalters 2 generiert.

In der Antennendiversityanlage in Figur 9 ist in vorteilhafter Weise der Großteil der Diversityfunktionen in einer gesonderten Einheit in der Mehrantennenanlage 1 untergebracht. Daraus ergibt sich die Möglichkeit, einen nach dem Grundprinzip des Funkempfangs gestalteten Empfänger 3 mit nur wenig Aufwand derart zu erweitern, dass die Empfangsanlage optional mit der Diversityfunktion nach der vorliegenden Erfindung ausgestattet werden kann. Im erweiterten Empfänger 39 sind hierfür lediglich Selektionseinrichtungen 30, 29, 31 vorhanden, über welche das Oszillatorsignal 27 in der Form des Oszillatorsignals doppelter Frequenz 28 und das Taktsignal 16 über die Hochfrequenzleitung 10 der Mehrantennenanlage 1 zugeführt sind. Dort wird das Adresssignal 14 zur Auswahl des Antennensignals durch Ansteuerung des Signal-Auswahlschalters 2 von einem Mikrocontroller 21 in der Weise erzeugt, dass ein ebenfalls vom Mikrocontroller 21 gesteuerter Signal-Vorauswahlschalter 2a vorhanden ist, welchem eingangsseitig ebenfalls die Antennensignale A1, A2,..AN zugeführt sind. Diese Antennensignale A1, A2,..AN werden alternierend über einen Frequenzumsetzer 34b - welcher zur Frequenzumsetzung ein vom Mikrocontroller 21 gesteuertes, in der Frequenz in Schritten von Vielfachen des Frequenzintervalls Δf gegenüber dem Oszillatorsignal 27 versetztes Frequenzintervall-Selektionssignal 35 zur schrittweisen Erfassung der Bandbreite des Empfangskanals B angesteuert ist - einem ZF-Schmalbandbandpass 18b mit der Bandbreite eines Frequenzintervalls Δf zugeführt. Am Ausgang des ZF-Schmalbandbandpasses 18b liegt jeweils ein frequenzintervallspezifischer Pegelwert 11 des betreffenden Antennensignals im Mikrocontroller 21 vor, woraus das aktuelle Adresssignal 14 und die Rankingliste gebildet sind. Das Taktsignal 16 der digital modulierten HF-Signale 24 sind dem Mikrocontroller 21 ebenso zugeführt, damit die Umschaltung des Signal-Auswahlschalters 2 erfindungsgemäß zeitrichtig erfolgen kann. Mit dieser Anordnung ist der Vorteil verbunden, dass während des Empfangs anhand schneller und zeitlich parallel durchgeführter Prüfvorgänge der Antennensignale A1..AN sowohl deren frequenzintervallspezifische Pegelwerte 11 und der daraus resultierenden Störrate 13 als auch die Frühinformation über deren Signalqualität jeweils verzögerungsarm ermittelt werden können und die Steuerung des Signal-Auswahlschalters 2 treffsicher im Hinblick auf das günstigste verfügbare HF-Signal 24 erfolgen kann.

In einer beispielhaften Ausführungsform einer derartigen Anlage wird das Oszillatorsignal 27 über einen Frequenzverdoppler 25, einen Oszillatorfrequenzhochpass 29 und über die Hochfrequenzleitung 10 der Mehrantennenanlage 1 zugeführt, worin es über den Frequenzteiler 26 in der ursprüngliche Frequenzlage einem Frequenzumsetzer 34a zur Überlagerung mit dem VCO-Signal 37 zugeführt wird. Der Mikrocontroller 21 steuert den Voltage-controlled oscillator 33 mit Referenzoszillator 32 schrittweise derart, dass die Überlagerung mit dem Oszillatorsignal 27 im Frequenzumsetzer 34a das Frequenzintervall-Selektionssignal 35 ergibt, welches - wiederum überlagert mit dem Antennensignal am Ausgang des Signal-Vorauswahlschalters 2a im Frequenzumsetzer 34b - das frequenzintervallspezifische ZF-Signal 36 liefert. Am Ausgang des ZF-Schmalbandbandpasses 18b können die frequenzintervallspezifischen Pegelwerte 11 vom Mikrocontroller 21 jeweils erfasst werden. Je größer die Bandbreite des Frequenzintervalls Δf gewählt ist, umso schneller können die frequenzintervallspezifischen Pegelwerte 11 ermittelt werden und die Diversity-Anlage bei umso größerer Fahrgeschwindigkeit und kleinerer Wellenlänge der HF-Empfangssignale verwendet werden. Andererseits wird das aus den frequenzintervallspezifischen Pegelwerten 11 abgeleitete Kriterium für die Auswahl eines günstigen Antennensignale A1...AN mit wachsender Bandbreite der Frequenzintervalle Δf weniger treffsicher. In der Praxis zeigt sich, dass die Bandbreite des ZF-Schmalbandbandpasses 18b für ein DVBT-System deshalb nicht größer gewählt werden sollte als 1,5 MHz. Für die im Zusammenhang mit Figur 8 beschriebenen Diversity-Anlage mit Pilotamplitudenerfassung 20 bedeutet dies entsprechend, dass der Frequenzabstand der Pilotträger, deren Amplituden zur Ermittlung der frequenzintervallspezifischen Pegelwerte 11 herangezogen werden, nicht größer sein sollte als 1,5 MHz.

Zur Erlangung der oben beschriebenen Frühinformation über die Signalqualität eines Antennensignals A1, A2,..AN wird das frequenzintervallspezifische ZF-Signal 36 einem ZF-Breitbandbandpass 18a mit der Frequenzbandbreite des Empfangskanals B zugeführt. Zur Erfassung der Signalleistung im Empfangskanal B wird das Frequenzintervall-Selektionssignal 35 über die Dauer des Messvorgangs auf die Frequenz des Oszillatorsignals 27 eingestellt, so dass am Ausgang des ZF-Breitbandbandpasses 18a der HF-Kanalspezifische Pegelwert 11a zur Bewertung im Mikrocontroller 21 vorliegt.

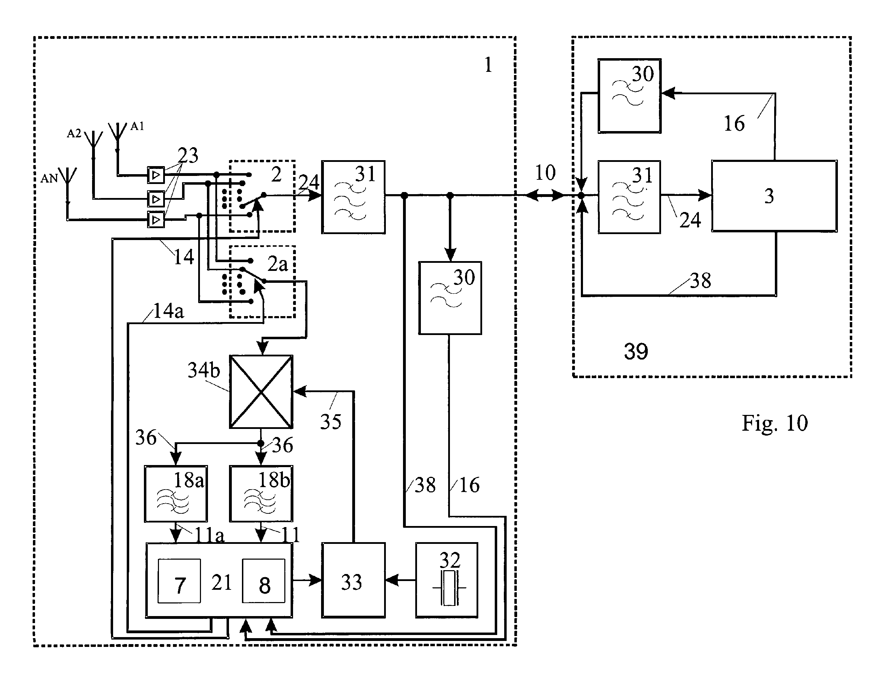

Die Antennendiversityanlage in Figur 10 arbeitet auf ähnliche Weise wie die Anlage in Figur 9, ist jedoch in vorteilhafter Weise dadurch vereinfacht, dass die Frequenz des Oszillatorsignals 27 im Empfänger 3 als digital codiertes Oszillatorfrequenz-Signal 38 über die Hochfrequenzleitung 10 dem Mikrocontroller 21 zugeführt ist. Der digital ansteuerbare Voltage-controlled oscillator 33 erzeugt - gesteuert vom Mikrocontroller 21 - jeweils das entsprechende Frequenzintervall-Selektionssignal 35.

**Antennendiversityanlage für den relativ breitbandigen Funkempfang in Fahrzeugen Liste der Bezeichnungen**

Mehrantennenanlage 1
Signal-Auswahlschalter 2
Signal-Vorauswahlschalter 2a
Empfänger 3
Diversityprozessor 4
frequenzintervallselektive Pegelerfassung 5
frequenzintervallselektive Pegelbewertung 6

Signalpegelschwelle 7
Störrateermittlung 8 des Empfangssignals 17
Störratespeicherung mit Adresssignalerzeugung 9
Hochfrequenzleitung 10
Frequenzintervallspezifische Pegelwerte 11
HF-Kanalspezifischer Pegelwert 11a
Störrate 13 des Empfangssignals 17
Adresssignal 14
Codiertes Adresssignal 14a
Vorauswahl-Adresssignal 14b
Taktgeber 15
Taktsignal 16
Empfangssignal 17, 17a
ZF-Breitbandbandpass 18a
ZF-Schmalbandbandpass 18b
Pegeldetektor 19
Pilotamplitudenerfassung 20
Mikrocontroller 21
Adresssignalgenerator 22
HF-Verstärker 23
HF-Signal 24
Frequenzverdoppler 25
Frequenzteiler 26
Oszillatorsignal 27
Ozillatorsignal doppelter Frequenz 28
Oszillatorfrequenzhochpass 29
Taktfrequenztiefpass 30
Hf-Bandpass 31
Referenzoszillator 32
Voltage-controlled oscillator 33
Frequenzumsetzer 34a
Frequenzumsetzer 34b
Frequenzintervall-Selektionssignal 35
frequenzintervallspezifisches ZF-Signal 36
VCO-Signal 37
codiertes Oszillatorfrequenz-Signal 38
erweiterter Empfänger 39

Antennensignale $A_1$, $A_2$,-.$A_N$
Bandbreite des Empfangskanals B
Frequenzintervall Δf
Pilotträger P

**Patentansprüche**

1. Antennendiversityanlage für den relativ breitbandigen Funkempfang in Fahrzeugen, die einen Empfänger (3), eine Mehrantennenanlage (1) mit Zuleitungen zu einem Signal-Auswahlschalter (2) zur Auswahl eines diversitätsmäßig anderen Empfangssignals und einen Diversityprozessor (4) umfasst, welcher die Qualität des gerade zum Empfänger (3) gelangenden Empfangssignals (17) bewertet, um bei Auftreten von Störungen durch Umschalten ein diversitätsmäßig anderes Empfangssignal zum Empfänger (3) zu führen,
**gekennzeichnet durch die folgenden Merkmale:**

- das im Empfänger (3) vorhandene Empfangssignal (17) mit der relativ großen Frequenzbandbreite B ist dem Diversityprozessor (4) zugeführt

- zur Feststellung der Signalqualität des Empfangssignals (17) ist dessen Frequenzbandbreite B in Frequenzintervalle (Δf) aufgeteilt, innerhalb deren jeweils die Frequenzanteile des Empfangssignals (17) bei gegebener Mehrwegeausbreitung weitgehend konstant sind

- Im Diversityprozessor (4) ist eine frequenzintervallselektive Pegelerfassung (5) vorhanden, welche die in den Frequenzintervallen auftretenden Anteile des Empfangssignals (17) als frequenzintervallspezifische Pegelwerte (11) getrennt erfasst,

- diese Anteile des Empfangssignals (17) werden in einer frequenzintervallselektiven Pegelbewertung (6) mit einer für den störungsfreien Empfang geforderten Signalpegelschwelle (7) getrennt verglichen und **durch** Auswertung dieser Messungen über alle Frequenzintervalle (Δf) die Störrate (13) des Empfangssignals (17) ermittelt

- bei Auftreten von Fehlern wird ein diversitätsmäßig anderes Empfangssignal (17) bzw. das Empfangssignal (17) mit der kleinsten Störrate (13) zum Empfänger (3) geführt.

2. Antennendiversityanlage nach Anspruch 1
**dadurch gekennzeichnet, dass**
das zum Diversityprozessor (4) geführte Empfangssignal (17a) durch das in den Zwischenfrequenzkanal umgesetzte Empfangssignal (17) gegeben ist

3. Antennendiversityanlage nach Anspruch 1 bis 2
**dadurch gekennzeichnet, dass**
aus der Mehrantennenanlage (1) durch Bildung von Linearkombinationen aus den Empfangssignalen der Antennen weitere Empfangssignale (17) gebildet sind, welche dem Signal-Auswahlschalter (2) zur Erhöhung der Signalvielfalt zugeführt sind.

4. Antennendiversityanlage nach Anspruch 1 bis 3
**dadurch gekennzeichnet, dass**
die Ausgangssignale der frequenzintervallselektiven Pegelbewertung (6) als binäre Signale der Störrateermittlung (8) des Empfangssignals (17) zugeführt sind, in welcher die Störrate (13) des Empfangssignals (17) durch Auswertung der binären Signale ermittelt ist.

5. Antennendiversityanlage nach Anspruch 1 bis 4
**dadurch gekennzeichnet, dass**
die Ermittlung der Störrate (13) in Verbindung mit der Aktualisierung eines günstigen durchgeschalteten Empfangssignals (17) wiederholend in kurzen zeitlich aufeinander folgenden Schritten erfolgt und die Zeitintervalle kurz genug sind, damit der innerhalb eines solchen Intervalls zurückgelegte Fahrweg die Länge λ/10 nicht überschreitet.

6. Antennendiversityanlage nach Anspruch 1 bis 5
**dadurch gekennzeichnet, dass**
ein Taktgeber (15) vorhanden ist, durch dessen Taktsignal (16) die Ermittlung der Störrate (13) wiederholend initiiert ist

7. Antennendiversityanlage nach Anspruch 1 bis 6
**dadurch gekennzeichnet, dass**
eine Störratespeicherung mit Adresssignalerzeugung (9) vorhanden ist, in welcher die Störrate (13) jeweils abgespeichert ist und in welcher die jeweils aktuelle Störrate (13) mit den zeitlich vorausgehenden abgespeicherten Störraten (13) verglichen ist und ein Adresssignal (14) an den Signal-Auswahlschalter (2) in der Weise erzeugt ist, dass aus den verfügbaren Empfangssignalen (17) dasjenige mit der kleinsten Störrate (13) durchgeschaltet ist.

8. Antennendiversityanlage nach Anspruch 1 bis 7
**dadurch gekennzeichnet, dass**
die Ermittlung der Störrate (13) in Verbindung mit der Aktualisierung eines günstigen durchgeschalteten Empfangssignals (17) wiederholend in kurzen zeitlich aufeinander folgenden Schritten erfolgt und die Zeitintervalle kurz genug sind, damit der innerhalb eines solchen Intervalls zurückgelegte Fahrweg vorzugsweise etwa die Länge λ/100 beträgt, jedoch die Länge λ/10 nicht überschreitet.

9. Antennendiversityanlage für den Funkempfang von OFDM-modulierten Signalen nach Anspruch 1 bis 8
**dadurch gekennzeichnet, dass**
die Frequenzintervalle Δf durch die Vielzahl der Unterträger gebildet sind und die frequenzintervallspezifischen Pegelwerte (11) der Frequenzintervalle (Δf) durch die Pegelwerte dieser Unterträger erfasst sind.

10. Antennendiversityanlage nach Anspruch 9
**dadurch gekennzeichnet, dass**
das Taktsignal (16) aus dem Symboltakt des OFDM-Signals abgeleitet ist und nicht während der Symboldauer sondern an dessen Anfang oder Ende auftritt.

11. Antennendiversityanlage nach Anspruch 10
**dadurch gekennzeichnet, dass**
jedoch das Taktsignal (16) während des Guard-Intervalls eingerichtet ist.

12. Antennendiversityanlage für den Funkempfang von DVBT-modulierten Signalen nach Anspruch 1 bis 11
**dadurch gekennzeichnet, dass**
die Frequenzintervalle Δf durch die Vielzahl der Pilotträger gebildet sind und die frequenzintervallspezifischen Pegelwerte (11) der Frequenzintervalle (Δf) durch die Pegelwerte der Pilotträger (P) erfasst sind.

13. Antennendiversityanlage für den Funkempfang von DVBT-modulierten Signalen nach Anspruch 1 bis 12 **dadurch gekennzeichnet, dass**

die frequenzintervallselektive Pegelerfassung (5) in der Weise gegeben ist, dass

die Frequenzintervalle (Δf) durch ausgewählte, entsprechend im Frequenzabstand der Frequenzintervalle (Δf) positionierte Pilotträger (P) gebildet sind und die frequenzintervallspezifischen Pegelwerte (11) der Frequenzintervalle (Δf) jeweils durch den Pegelwert des einem Frequenzintervall (Δf) zugeordneten Pilotträgers (P) erfasst sind.

14. Antennendiversityanlage nach Anspruch 13 **dadurch gekennzeichnet, dass**

die Frequenzbandbreite eines Frequenzintervalls jeweils etwa 50 kHz jedoch maximal 1,5 MHz gewählt ist.

15. Antennendiversityanlage nach Ansprüchen 7 bis 14 **dadurch gekennzeichnet, dass**

zur Unterstützung der schnellen Aktualisierung der durch Störratespeicherung (9) gebildeten Rankingliste die jeweils innerhalb der gesamten Frequenzbandbreite des Empfangskanals B auftretenden Empfangsleistungen der Antennensignale zusätzlich gesondert erfasst sind und Antennensignale mit aktuell zu kleiner Empfangsleistung durch nachrangige Eingliederung in die Rankingliste für die Anwahl lediglich nachrangig zur Verfügung stehen.

16. Antennendiversityanlage nach Anspruch 15 **dadurch gekennzeichnet, dass**

der Empfänger (3) durch eine Pilotamplitudenerfassung (20), einen Mikrocontroller (21)

und einen ZF-Breitbandbandpass (18a) mit Pegeldetektor (19) zu einem erweiterten Empfänger (39) ergänzt ist und der Pegel des ZF-Signals (36) am Ausgang des ZF-Breitbandbandpasses (18a) mit Pegeldetektor (19) in Form des HF-kanalspezifischen Pegelwertes (11a) erfasst ist, welcher zusammen mit den frequenzintervallspezifischen Pegelwerten (11) dem Mikrocontroller (21) zur Aktualisierung der Rankingliste sowie zur Gestaltung des codierten Adresssignals (14a) für das zu wählende Antennensignal A1...AN zugeführt ist, und das codierte Adresssignal (14a) über die Hochfrequenzleitung (10) zu einem in der Mehrantennenanlage (1) befindlichen Adresssignalgenerator (22) übertragen ist, von dessen Adresssignal (14) der Signal-Auswahlschalter (2) gesteuert ist. (Fig. 8)

17. Antennendiversityanlage nach Anspruch 15 **dadurch gekennzeichnet, dass**

ein erweiterter Empfänger (39) vorhanden ist, dessen Oszillatorsignal (27) und dessen Taktsignal (16) über Selektionseinrichtungen (30, 29, 31) und über die Hochfrequenzleitung (10) der Mehrantennenanlage (1) zugeführt sind, in welcher das Adresssignal (14) zur Auswahl des Antennensignals durch Ansteuerung des Signal-Auswahlschalters (2) von einem Mikrocontroller (21) in der Weise erzeugt ist, dass ein ebenfalls vom Mikrocontroller (21) gesteuerter Signal-Vorauswahlschalter (2a) vorhanden ist, welchem eingangsseitig die Antennensignale A1..AN zugeführt und diese alternierend über einen Frequenzumsetzer (34b), - welcher zur Frequenzumsetzung mit einem vom Mikrocontroller (21) gesteuertes, in der Frequenz in Schritten von Vielfachen des Frequenzintervalls Δf gegenüber dem Oszillatorsignal (27) versetztes Frequenzintervall-Selektionssignal (35) zur schrittweisen Erfassung des Empfangskanals B angesteuert ist - einem ZF-Schmalbandbandpass (18b) mit der Bandbreite eines Frequenzintervalls Δf zugeführt sind, so dass an dessen Ausgang jeweils ein frequenzintervallspezifischer Pegelwert (11) des betreffenden Antennensignals im Mikrocontroller (21) vorliegt und daraus das aktuelle Adresssignal (14) und die Rankingliste gebildet sind. (Fig. 9)

18. Antennendiversityanlage nach Anspruch 16 **dadurch gekennzeichnet, dass**

zusätzlich ein ZF-Breitbandbandpass (18a) mit der Frequenzbandbreite des HF-Kanals vorhanden ist, welchem das Eingangssignal des ZF-Schmalbandbandpasses (18b) ebenfalls zugeführt ist und dessen Ausgangssignal bei Frequenzgleichheit zwischen dem Frequenzintervall-Selektionssignal (35) und dem Oszillatorsignal (27) den HF-kanalspezifischen Pegelwert (11a) an den Mikrocontroller (21) liefert, in welchem anhand dieses Pegelwerts die Vorentscheidung bezüglich der möglichen Aussonderung eines Antennensignals gefällt ist, bevor die einzelnen frequenzintervallspezifischen Pegelwerte (11) erfasst sind. (Fig. 9, 10)

19. Antennendiversityanlage nach Anspruch 17 und 18 **dadurch gekennzeichnet, dass**

die Anlage **dadurch** vereinfacht ist, dass die Frequenz des Oszillatorsignals (27) im erweiterten Empfänger (3) als digital codiertes Oszillatorfrequenz-Signal (38) über die Hochfrequenzleitung (10) dem Mikrocontroller (21) zugeführt ist und das entsprechende Frequenzintervall-Selektionssignal (35) jeweils vom digital ansteuerbaren Voltage-controlled oscillator (33) erzeugt ist, welcher vom Mikrocontroller (21) gesteuert ist. (Fig. 10)

Fig. 1

Fig. 2

Empfangssignalpegel bei Rayleigh-Mehrwegempfang mit Laufwegunterschieden

EP 2 037 593 A2

Pegelverteilung in dB über dem Empfangsfrequenzkanal

Frequenz in Vielfachen von Pilotträgerfrequenzabständen von 16kHz

Fig. 3

Pegelverteilung in dB über dem Empfangsfrequenzkanal

Frequenz in Vielfachen von Pilotträgerfrequenzabständen von 16kHz

Fig. 4

EP 2 037 593 A2

## Diversityeffizienz  n= 2,1

### Störwahrscheinlichkeit bei Ausbreitungsprofil 100m/300m

Relative Signalpegelschwelle in dB für fehlerfreie Detektion

Fig. 5

Fig. 6

14

Diversityeffizienz  n= 1,7

Störwahrscheinlichkeit bei Ausbreitungsprofil 400m/1200m

Relative Signalpegelschwelle in dB für fehlerfreie Detektion

Fig. 7

Fig. 8

Fig. 9

EP 2 037 593 A2

Fig. 10

EP 2 037 593 A2

**EP 2 037 593 A2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0521123 B1